# EUROPEAN PATENT APPLICATION

(11) **EP 4 741 120 A1**
(43) Date of publication of application: **13.05.2026**
(21) Application number: 25186630.7
(22) Date of filing: 01.07.2025
(51) Int. Cl.: B26D 1/06, B26D 7/01, B65H 35/06, B26D 1/00

(54) **APPARATUS FOR MANUFACTURING SECONDARY BATTERY AND ELECTRODE PLATE CUTTING UNIT FOR MANUFACTURING SECONDARY BATTERY**

(30) Priority: 06.11.2024 KR 20240156600
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si (KR)
(74) Representative: Marks & Clerk LLP

(57) **Abstract**

An apparatus for manufacturing a secondary battery and an electrode plate cutting unit are disclosed.. The apparatus includes a transfer part configured to move an electrode plate, a winding part configured to wind the electrode plate transferred by the transfer part, an ascending/descending upper cutter which is installed above the transport path to allow a mounting direction to be changed and on which is formed an upper cutter blade, a stripper positioned below the electrode plate and configured to support the electrode plate when the electrode plate is cut, a fixed body configured to elastically support the stripper, and a lower cutter which is supported on a side portion of the fixed body and on which a lower cutter blade is formed, wherein one of the upper cutter blade and the lower cutter blade includes two or more blades.

## Description

### FIELD

The present disclosure relates to the manufacture of a secondary battery, and more specifically, to an apparatus for manufacturing a secondary battery and an electrode plate cutting unit for manufacturing a secondary battery.

### BACKGROUND

Different from primary batteries that are not designed to be charged, secondary batteries are designed to be discharged and recharged. A secondary battery may broadly include an electrode assembly consisting of a positive electrode plate, a separator, and a negative electrode plate, a case (or can) for accommodating the electrode assembly, a substrate tab formed by extending from an uncoated portion of each electrode plate of the electrode assembly, and an external terminal connected to the substrate tab.

Types of the electrode assembly accommodated in the case include a stacked type electrode assembly and a jelly-roll type electrode assembly. The jelly-roll type electrode assembly is manufactured by winding an electrode plate, which is continuously supplied, using a winding device. The winding device includes an electrode plate cutter.

The electrode plate cutter is a device for cutting the electrode plate at a designed length interval and includes an upper cutter and a lower cutter. The upper cutter is installed above a transfer path of the electrode plate, the lower cutter is installed below the transfer path, and the upper cutter and the lower cutter cut the electrode plate through cross motion with respect to each other. However, since a blade of the conventional upper cutter or lower cutter is formed in only one place, when the blade wears out, the entire upper cutter or lower cutter should be discarded and replaced with a new cutter. This causes a problem of increasing costs of replacing the upper and lower knives of the electrode plate cutter.

The herein information disclosed in this Background section is for enhancement of understanding of the background of the present disclosure, and therefore, it may contain information that does not constitute a related (or prior) art.

### SUMMARY

The present disclosure is directed to providing an improved electrode plate cutting unit and an apparatus for manufacturing a secondary battery using the same.

According to an aspect of the present disclosure, there is provided an apparatus for manufacturing a secondary battery, which includes a transfer part configured to move an electrode plate, which will be cut, along a transfer path, a winding part configured to wind the electrode plate transferred by the transfer part, an ascending/descending upper cutter which is installed above the transport path to allow a mounting direction to be changed and on which is formed an upper cutter blade, a stripper positioned below the electrode plate and configured to support the electrode plate when the electrode plate is cut, a fixed body configured to elastically support the stripper, and a lower cutter which is supported on a side portion of the fixed body and on which is formed a lower cutter blade, wherein one of the upper cutter blade and the lower cutter blade includes two or more blades.

According to another aspect of the present disclosure, there is provided an electrode plate cutting unit for manufacturing a secondary battery, which includes an ascending/descending upper cutter which is installed above a transfer path of an electrode plate transferred along the transfer path to allow a mounting direction to be changed and which is formed an upper cutter blade, a stripper positioned below the transfer path of the electrode plate and configured to support the electrode plate when the electrode plate is cut, a fixed body configured to elastically support the stripper, and a lower cutter which is supported on a side portion of the fixed body below the transfer path and on which is formed a lower cutter blade, wherein one of the upper cutter blade and the lower cutter blade includes two or more blades.

The lower cutter may be mounted on the fixed body to allow a mounting direction to be changed in order to use one of a plurality of blades selectively.

The lower cutter blade may comprise: a first blade configured to cut the electrode plate through cross motion with the upper cutter; and a second blade spaced apart from the first blade and configured to remain in a standby state when the first blade is in use.

The lower cutter may have a plate shape; and the first blade and the second blade may be positioned parallel to one another on an upper end portion of the lower cutter while the lower cutter is mounted on the fixed body.

A third blade and a fourth blade, which are respectively parallel to the first blade and the second blade and maintain a standby state when the first blade is in use, may be formed on the lower cutter.

The lower cutter may have a plate shape, the first blade and the second blade may be positioned at the upper end portion of the lower cutter, and the third blade and the fourth blade may be positioned at a lower end portion of the lower cutter while the lower cutter is mounted on the fixed body.

The upper cutter blade may include: a first blade configured to apply a shear force to the electrode plate through cross motion with the lower cutter while descending; and

a second blade parallel to the first blade and spaced apart therefrom and configured to remain in a standby state when the first blade is in use.

The first blade may be formed at a front end portion in a transfer direction of the electrode plate; and the second blade may be formed at a side opposite to the first blade and is in contact with the electrode plate at the same time as the first blade.

The second blade may be formed at a point spaced apart from the electrode plate while the first blade is in contact with the electrode plate.

A third blade and a fourth blade, which are respectively parallel to the first blade and the second blade and maintain a standby state when the first blade is in use, may be further formed on the upper cutter.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a schematic diagram illustrating an electrode assembly of a secondary battery that may be manufactured using an apparatus for manufacturing a secondary battery according to embodiments of the present disclosure;
FIG. 2 is a diagram illustrating an interior of a pouch-type battery to which the electrode assembly of FIG. 1 is applied;
FIG. 3 is a cross-sectional view illustrating a cylindrical battery that may be manufactured using the apparatus for manufacturing a secondary battery according to embodiments of the present disclosure;
FIG. 4 is a perspective view illustrating an exterior of a prismatic battery that may be manufactured using the apparatus for manufacturing a secondary battery according to embodiments of the present disclosure;
FIG. 5 is a cross-sectional view along line A-A of FIG. 4;
FIG. 6 is a diagram illustrating a basic configuration of the apparatus for manufacturing a secondary battery according to embodiments of the present disclosure;
FIG. 7 is a cut perspective view illustrating a lower cutter shown in FIG. 6;
FIG. 8 is a perspective view illustrating the lower cutter applicable to an electrode plate cutting unit according to embodiments of the present disclosure;
FIG. 9 is a diagram illustrating another example of the lower cutter applicable to the electrode plate cutting unit according to embodiments of the present disclosure;
FIG. 10 is a diagram illustrating still another example of the lower cutter applicable to the electrode plate cutting unit according to embodiments of the present disclosure;
FIG. 11 is a diagram illustrating yet another example of the lower cutter applicable to the electrode plate cutting unit according to embodiments of the present disclosure;
FIG. 12 is a plan view illustrating the lower cutter shown in FIG. 11;
FIG. 13 is a diagram illustrating yet another example of the lower cutter applicable to the electrode plate cutting unit according to embodiments of the present disclosure;
FIG. 14 is a plan view illustrating the lower cutter shown in FIG. 13;
FIG. 15 is a diagram illustrating another example of the apparatus for manufacturing a secondary battery according to embodiments of the present disclosure;
FIG. 16 is a perspective view separately illustrating an upper cutter of FIG. 15;
FIG. 17 is a side view illustrating the upper cutter applicable to the electrode plate cutting unit according to embodiments of the present disclosure;
FIG. 18 is a side view illustrating another example of the upper cutter applicable to the electrode plate cutting unit according to embodiments of the present disclosure;
FIG. 19 is a side view illustrating yet another example of the upper cutter applicable to the electrode plate cutting unit according to embodiments of the present disclosure; and
FIG. 20 is a diagram illustrating another example of the apparatus for manufacturing a secondary battery according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

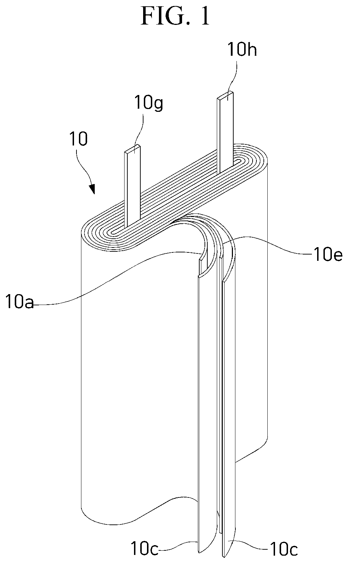

FIG. 1 is a schematic view illustrating an electrode assembly 10 of a secondary battery which may be manufactured through an apparatus 20 for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

In embodiments, the electrode assembly 10 may be a stack type rather than a winding type, and the shape of the electrode assembly 10 is not limited in the present disclosure. **In** addition, the electrode assembly 10 may be a Z-stack electrode assembly in which a positive electrode plate and a negative electrode plate are inserted into both sides (e.g., opposite sides) of a separator, which is then bent (or folded) into a Z-stack

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10aa may include a first electrode tab 10g (e.g., a first uncoated portion), which is a region to which the first electrode active material is not applied. The first electrode tab 10g may be connected to an external first terminal. In some embodiments, when the first electrode plate 10g is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to the other side (e.g., the opposite side) of the electrode assembly 10 when the second electrode plate 10e is manufactured, or the second electrode plate 10e may protrude to the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

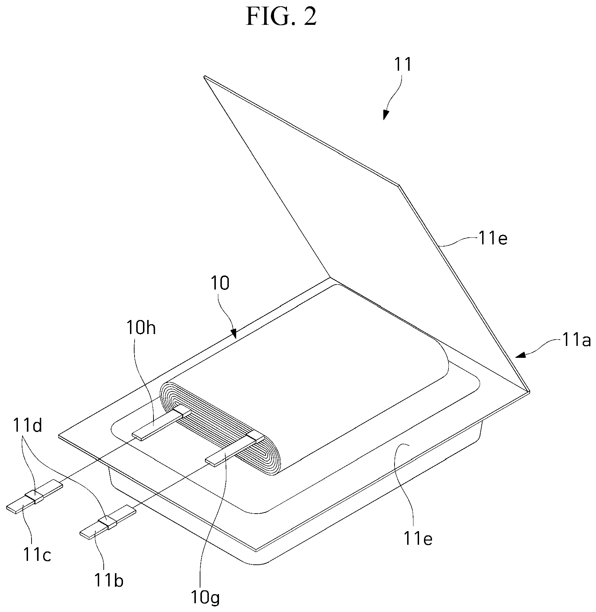

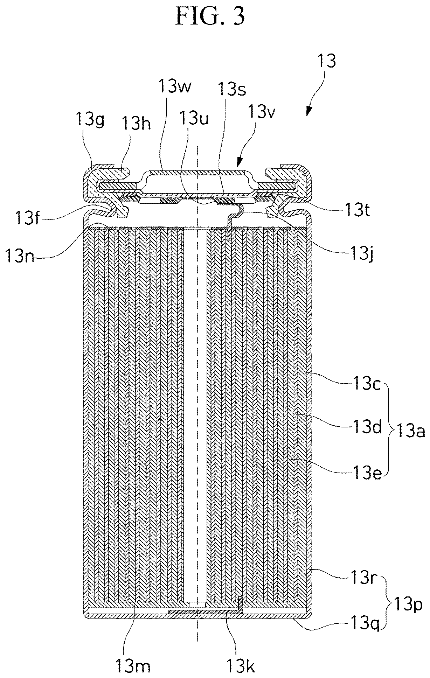

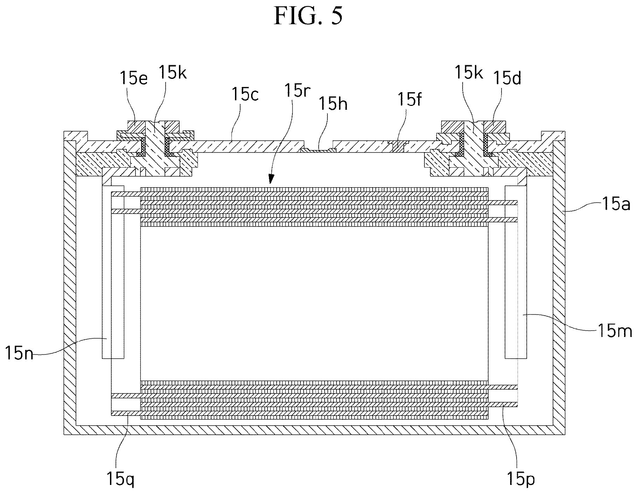

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the herein electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X₃O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0<α<2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0<α<2); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄(0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on one another.

FIG. 2 is a view illustrating an interior of a pouch-type battery 11 to which the electrode assembly 10 of FIG. 1 is applied.

The pouch-type secondary battery 11 includes an electrode assembly 10 and a pouch 11a that accommodates the electrode assembly 10.

The electrode assembly 10 is the same as that illustrated in FIG. 1. The first electrode tab 11g and the second electrode tab 11h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 11e at the edges thereof come into contact with each other with accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery 13 manufactured by the apparatus 20 for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 10. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent around the protrusion part.

When gas is generated due to overcharging or abnormal operation of the secondary battery 13, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s , the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Meanwhile, another insulating plate 13m may be included for insulation between the electrode assembly 13a and the bottom portion 13q of the case 13p.

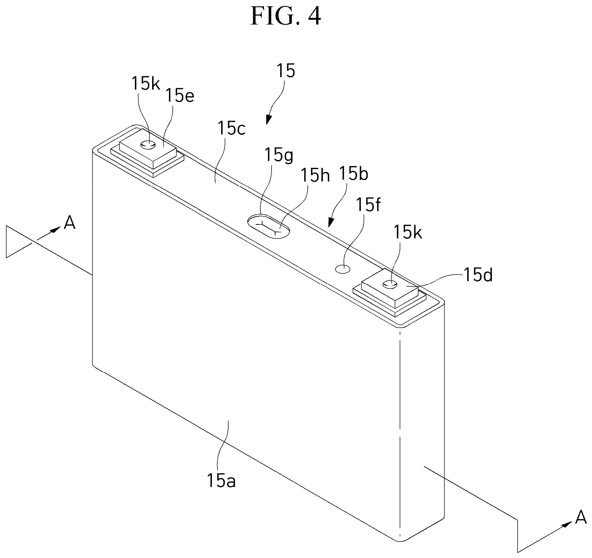

FIG. 4 is a perspective view illustrating an exterior of a prismatic battery 15 which may be manufactured by the apparatus 20 for manufacturing a secondary battery according to embodiments of the present disclosure.

A case 15a forms the overall appearance of the prismatic battery 15 and may be formed of a conductive metal such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case 15a, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 13a may be formed by winding or stacking a first electrode plate, a separator, and a second electrode plate. When the electrode assembly 15r is a wound type, a winding axis may be parallel to the longitudinal direction of the case. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to one another and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. **In** some embodiments, the second electrode tab 15q may be formed by being cut in advance to protrude to the other side (e.g., the opposite side) of the electrode assembly when the second electrode plate is manufactured, or the second electrode plate 10e may protrude to the other side of the electrode assembly more than (e.g., farther than or beyond) the separator without being separately cut.

**In** FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

**In** some embodiments, an electrode assembly 15r is accommodated in the case 15a along with an electrolyte.

**In** the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 1, the first current collector 15m and the second current collector 15n are connected to the first terminal 15d and the second terminal 15e through connection members 15k, respectively. **In** some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

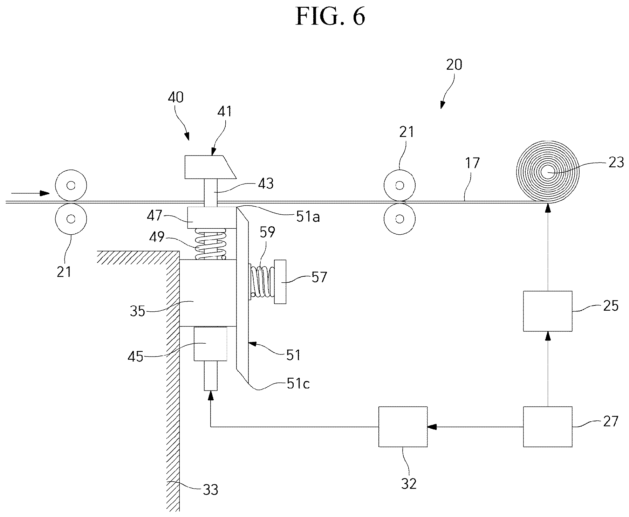

FIG. 6 is a diagram illustrating a basic configuration of the apparatus 20 for manufacturing a secondary battery according to embodiments of the present disclosure.

As shown in the drawing, the apparatus 20 for manufacturing a secondary battery according to embodiments may include a transfer part, a winding part 23, a winding part driver 25, a controller 27, and a cutting unit 40.

The transfer part may move an electrode plate 17, which will be cut, along a transfer path. The transfer part may include a plurality of transfer rollers 21. Some of the transfer rollers 21 are rollers having driving forces, and the remaining transfer rollers 21 do not have driving forces and may only serve to support the transfer rollers tautly.

The electrode plate 17 has a predetermined width and is a stacked body made of a base material and a composite material. The electrode plate 17 may be continuously transferred along the transfer path provided by the transfer part and wound on the winding part 23. The electrode plate 17 may be either a negative electrode plate or a positive electrode plate.

The winding part 23 may be rotated by power received from the winding part driver 25 and wind the electrode plate 17 thereon. The electrode plate 17 wound on the winding part 23 may be unloaded by a worker and move to a subsequent process.

The winding part driver 25 may be controlled by the controller 27. The winding part driver 25 may be operated in response to a control signal of the controller 27 to rotate or not rotate the winding part 23.

In addition, the cutting unit 40 may cut the electrode plate 17 to be transferred into units of a predetermined length. Since the winding of the electrode plate 17 is a jelly-roll-type electrode assembly, a cut length of the electrode plate 17 may vary depending on a diameter of a jelly-roll being manufactured. The electrode plate 17 cut by the cutting unit 40 may be wound on the winding part 23 and then unloaded.

In addition, the cutting unit 40 may include an upper cutter 41, a stripper 47, a mount spring 49, a fixed body 35, a lower cutter 51, a pusher 57, and a pressurizing spring 59.

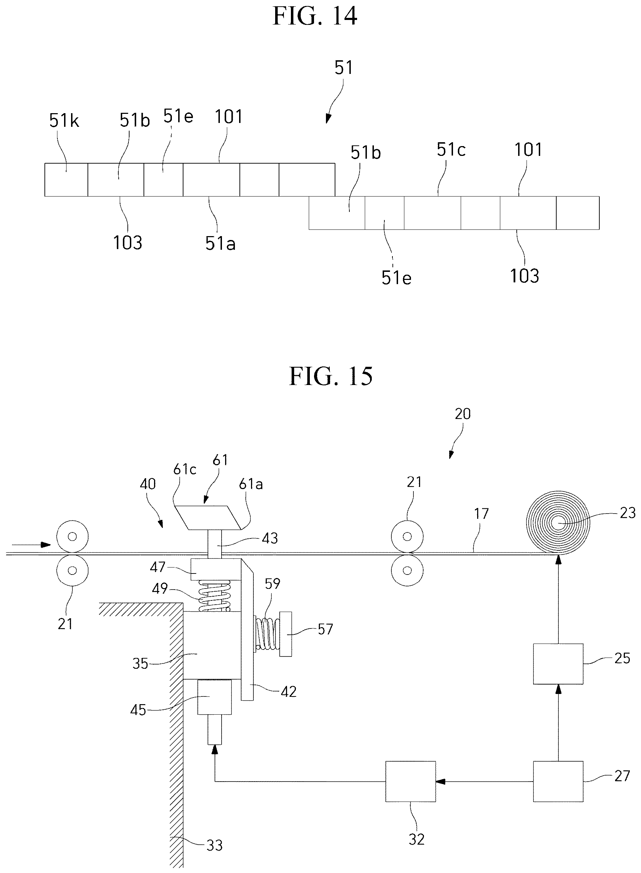

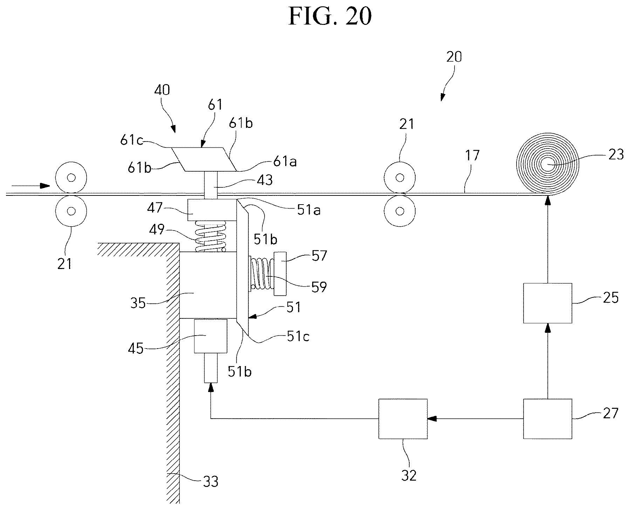

The upper cutter 41 may be moved up and down while installed above the transport path of the electrode plate 17. In the embodiment shown in FIG. 6, the upper cutter 41 has the shape of a conventional upper cutter. However, as will be described herein with reference to FIGS. 15 and 20, a plurality of blades may be formed in the upper cutter. The upper cutter according to embodiments will be described herein.

A vertically extending ascending/descending rod 43 may be fixed to a lower portion of the upper cutter 41. The ascending/descending rod 43 may be a vertical shaft passing through the stripper 47 and the fixed body 35. A lower end portion of the ascending/descending rod 43 may extend to a lower portion of the fixed body 35 and be coupled to the stopper 45.

The stopper 45 may be caught on a bottom surface of the fixed body 35 to restrict a maximum ascending height of the upper cutter 41. The ascending/descending rod 43 may repeat an ascending/descending movement by power transmitted from the upper cutter driver 32. As the ascending/descending rod 43 descends, the upper cutter 41 may perform cross motion with the lower cutter 51 to cut the electrode plate 17.

The fixed body 35 may elastically support the stripper 47 while fixed to the support structure 33. The support structure 33 is a structure included in the apparatus 20 for manufacturing a secondary battery and may support the fixed body 35.

The stripper 47 and the mount spring 49 may be installed above the fixed body 35. The stripper 47 may receive an elastic force from the mount spring 49 to elastically support a bottom surface of the electrode plate 17 when cutting the electrode plate 17. The mount spring 49 may elastically support the stripper 47 while supported on an upper portion of the fixed body 35.

The lower cutter 51 may come into close contact with a side surface of the fixed body 35 and supported thereon to cut the electrode plate 17 through cross motion with the upper cutter. A coupling state of the lower cutter 51 to the fixed body 35 may be maintained by the pusher 57 and the pressurizing spring 59. The pusher 57 may be a bolt passing through the lower cutter 51 to be screw-coupled to the fixed body 35. The pressurizing spring 59 may bring the lower cutter 51 into close contact with the fixed body 35 while compressed by the pusher 57.

The lower cutter 51 may have a plate shape with a predetermined thickness and a plurality of blades. In addition, the lower cutter 51 may be mounted on the fixed body 35 in a way that allows a mounting direction to be changed, so that one of the plurality of blades can thereby be selectively used. That is, when one blade becomes dull while being used, the lower cutter 51 may be separated from the fixed body 35 and the blade that is not yet used may be positioned on a side portion of the stripper 47. "Changing the mounting direction" in this description may mean that, when the blade in use becomes dull, the lower cutter 51 is separated and remounted to change the blade in use with a blade that has not yet been used to be positioned at a cutting point.

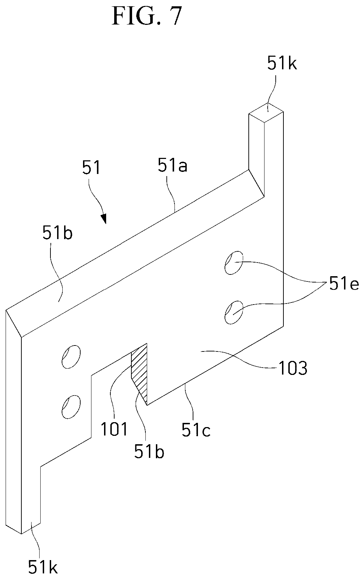

FIG. 7 is a cut perspective view illustrating a portion of the lower cutter 51 shown in FIG. 6.

As shown in the drawing, the lower cutter 51 may have a quadrangular plate shape with a predetermined thickness and may have a first blade 51a at an upper end portion and a second blade 51c at a lower end portion. Since the first blade 51a is positioned at the upper end portion, the first blade 51a may cut the electrode plate 17 with the upper cutter while performing cross motion. In addition, the second blade 51c may be spaced apart from the first blade 51a and may maintain a standby state when the first blade is in use.

Inclined surfaces 51b may be formed at the upper and lower end portions of the lower cutter 51. The inclined surface 51b formed at the upper end portion may be inclined downward toward a surface B 103. In addition, the inclined surface 51b formed at the lower end portion may be inclined upward toward a surface A 101. The surface A 101 may come into close contact with the fixed body 35 and fixed thereto when the first blade 51a is used, and a surface B may come into close contact with the fixed body 35 and fixed thereto when the second blade 51c is used.

In addition, a plurality of through-holes 51e may be formed in the lower cutter 51. The through-holes 51e are holes through which the pusher 57 may pass.

The lower cutter 51 with the herein configuration is fixed to the fixed body 35 and while the first blade 51a is fixed to be positioned at the upper end portion, the electrode plate 17 may be cut. When the first blade 51a becomes dull or reaches its designed lifetime due to the continued cutting, the pusher 57 may be released and the lower cutter 51 may be separated, flipped upside down, and fixed to the fixed body 35. In this case, the surface B may come into close contact with the fixed body 35.

Reference numeral 51k is an electrode plate guide for preventing meandering of the electrode plate.

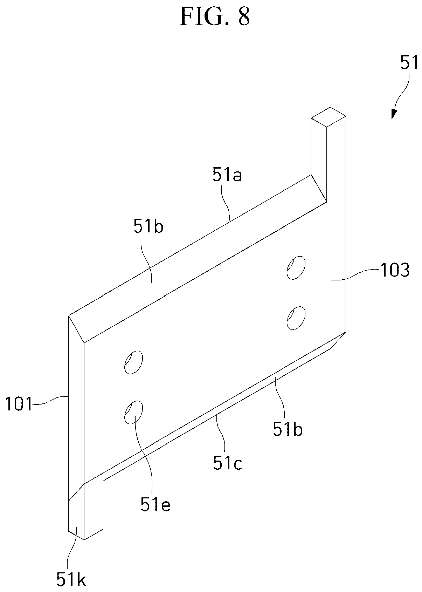

FIG. 8 is a diagram illustrating a modified example of the lower cutter 51 applicable to the electrode plate cutting unit 40 according to embodiments of the present disclosure.

As shown in the drawing, the first blade 51a and the second blade 51c may be formed in parallel at the upper and lower end portions of the lower cutter 51. However, both the first blade 51a and the second blade 51c are positioned on the surface A 101. Therefore, only the surface A 101 of the lower cutter 51 of FIG. 8 comes into contact with the fixed body 35. In order to replace the used blade from the first blade 51a to the second blade 51c, the pusher 57 is released, the lower cutter 51 is rotated clockwise or counterclockwise, and the pusher is reassembled. After the reassembly, in the lower cutter 51, the second blade 51c may be positioned at the upper end portion and the first blade 51a may be positioned at the lower end portion.

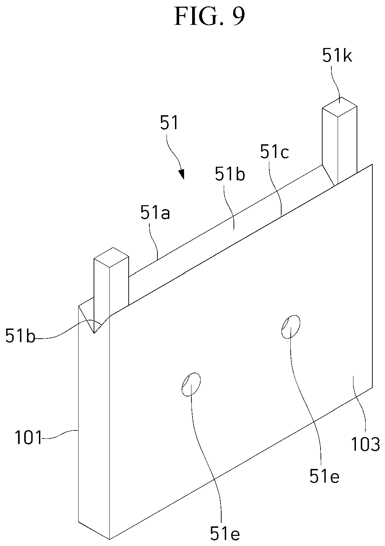

FIG. 9 is a diagram illustrating another example of the lower cutter 51 applicable to the electrode plate cutting unit 40 according to embodiments of the present disclosure.

The lower cutter 51 shown in FIG. 9 may have a plate shape with a predetermined thickness and may have the first blade 51a and the second blade 51c at an upper end portion. The first blade 51a and the second blade 51c may maintain a mutual parallel state on a side portion of the stopper 45 while the lower cutter 51 is mounted on the fixed body 35.

In addition, the first blade 51a may be positioned at an upper end of the surface A 101, and the second blade 51c may be positioned on an upper end of the surface B 103. In addition, an inclined surface 51b cut in a V shape may be formed between the first blade 51a and the second blade 51c. In the lower cutter 51 of FIG. 9, the surface A 101 may come into close contact with the fixed body 35 when the first blade 51a is used, and the surface B 103 may come into close contact with the fixed body 35 when the second blade 51c is used.

When the first blade 51a is used and then the used blade is replaced with the second blade 51c, the pusher 57 is released, the lower cutter 51 is separated from the fixed body 35, the lower cutter 51 is flipped upside down, the surface B 103 is set to come into close contact with the fixed body 35, and the pusher 57 is remounted.

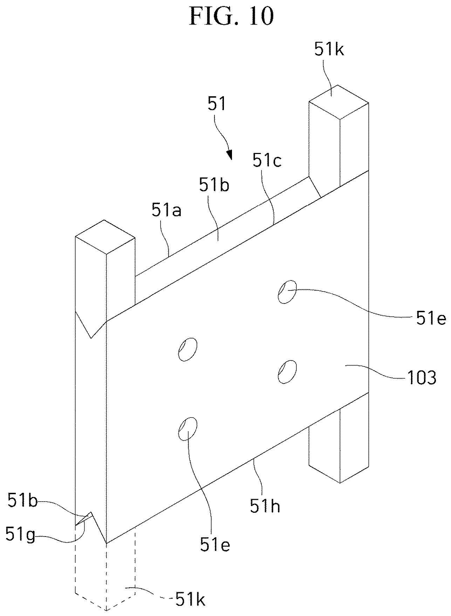

FIG. 10 is a diagram illustrating a still another example of the lower cutter 51 applicable to the electrode plate cutting unit 40 according to embodiments of the present disclosure.

As shown in FIG. 10, the lower cutter 51 may have a vertical symmetric configuration. That is, a first blade 51a and a second blade 51c may be positioned at the upper end portion of the lower cutter 51, and a third blade 51g and a fourth blade 51h may be formed at the lower end portion. The first, second, third, and fourth blades 51a, 51c, 51g, and 51h may be mutually parallel. When one blade is in use, the remaining three blades remain in a standby state.

In addition, the first blade 51a and the third blade 51g may be positioned at upper and lower end portions of the surface A 101, respectively, and the second blade 51c and the fourth blade 51h may be formed at upper and lower end portions of the surface B 103, respectively. Since the lower cutter 51 shown in FIG. 10 has four blades, its lifetime may be four times longer than that of the conventional lower cutter.

In the lower cutter 51 with the herein configuration, when the first blade 51a is used and then the second blade 51c is to be used, the lower cutter is separated, upside down, and remounted. In addition, when the first blade 51a is used and then the third blade 51g is to be used, the pusher 57 is separated, the third blade 51g is set to be positioned at the upper end portion, and then the pusher 57 is remounted.

When the first blade 51a and the third blade 51g are used, the surface A 101 comes into close contact with the fixed body 35. In addition, when the second blade 51c and the fourth blade 51h are used, the surface B may come into close contact with the fixed body 35.

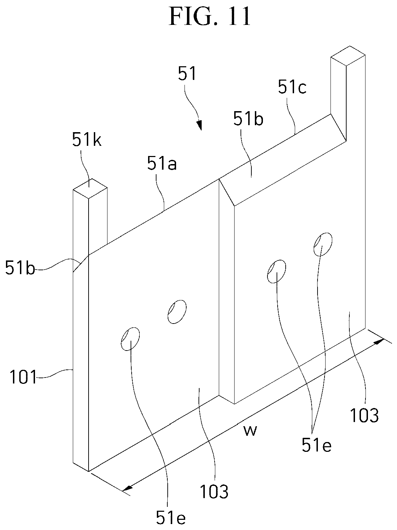

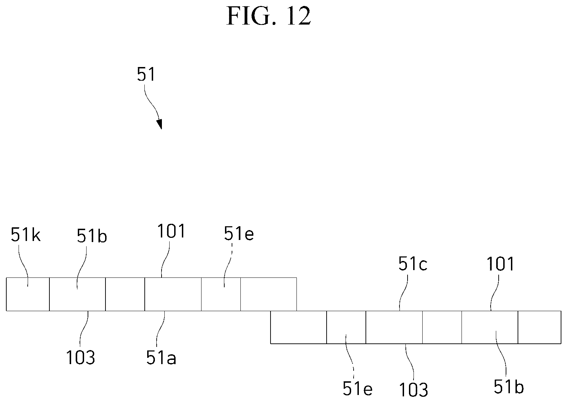

FIG. 11 is a diagram illustrating yet another example of the lower cutter 51 applicable to the electrode plate cutting unit 40 according to embodiments of the present disclosure, and FIG. 12 is a plan view illustrating the lower cutter shown in FIG. 11.

As shown in FIGS. 11 and 12, the first blade 51a and the second blade 51c may form a straight line at the upper end portion of the lower cutter 51. A width w of the lower cutter 51 of FIG. 11 may be more than twice that of the electrode plate 17. The electrode plate 17 may pass through an upper portion of the first blade 51a or an upper portion of the second blade 51c.

The first blade 51a may be positioned at the upper end portion of the surface B 103 and connected to the surface A 101 through the inclined surface 51b. In addition, the second blade 51c may be formed at the upper end portion of the surface A 101 and connected to the surface B 103 through the inclined surface 51b.

In the lower cutter 51 with the herein configuration, in order to use the first blade 51a, the surface B 103 on the first blade 51a comes into close with the fixed body 35 and fixed thereto. In addition, in order to use the second blade 51c, the lower cutter 51 is separated from the support structure 33 and flipped upside down and the surface A 101 on the second blade 51c comes into close contact with the fixed body 35 and fixed thereto.

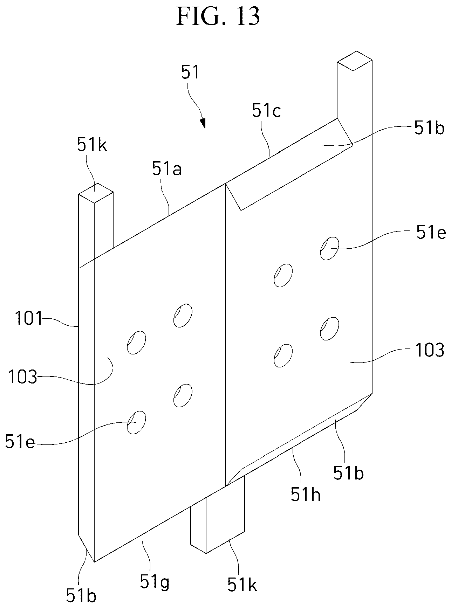

FIG. 13 is a diagram illustrating yet another example of the lower cutter 51 applicable to the electrode plate cutting unit 40 according to embodiments of the present disclosure, and FIG. 14 is a plan view illustrating the lower cutter shown in FIG. 13.

As shown in FIG. 13, the third blade 51g and the fourth blade 51h may be further formed at the lower end portion of the lower cutter 51. The third blade 51g may be positioned at the lower end portion of the surface B, and the fourth blade 51h may be positioned below the second blade 51c. In addition, the third blade 51g and the fourth blade 51h may form a straight line. The third blade 51g is connected to the surface A 101 through the inclined surface 51b, and the fourth blade 51h is connected to the surface B 103 through the inclined surface 51b. In order to use the third blade 51g or the fourth blade 51h, as described herein, the pusher 57 is separated and then the lower cutter 51 is mounted on the fixed body 35.

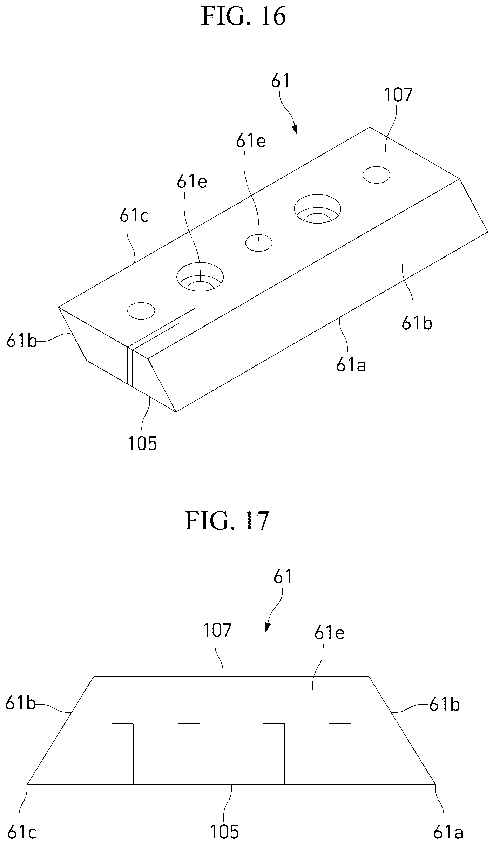

FIG. 15 is a diagram illustrating another example of the apparatus 20 for manufacturing a secondary battery according to embodiments of the present disclosure, and FIG. 16 is a perspective view separately illustrating an upper cutter 61 of FIG. 15. Reference numerals that are the same as those shown in FIG. 6 indicate the same components with the same functions, and description thereof will be omitted. The lower cutter 42 in FIG. 16 is a typical lower cutter.

As shown in FIG. 16, a first blade 61a and a second blade 61c may be formed on the upper cutter 61. The first blade 61a and the second blade 61c may be selectively used and may apply a shear force to the electrode plate through cross motion with the lower cutter while descending. The second blade 61c may be parallel to the first blade 61a and spaced apart from the first blade 61a and may stand by when the first blade is in use.

The upper cutter 61 is detachable for the ascending/descending rod 43. That is, the upper cutter 61 is installed at an upper end portion of the ascending/descending rod 43 to allow a mounting direction to be changed. Changing the mounting direction may mean adjusting a position of one of the plurality of blades provided in the upper cutter 61 to be positioned on a vertical extension line of the blade of the lower cutter.

In addition, the upper cutter 61 may have a predetermined cross-sectional shape in a width direction of the electrode plate 17. An upper surface of the upper cutter 61 may be a surface B 107, and a lower surface thereof may be a surface A 105. The surface A 105 is a surface facing the electrode plate. The surface A 105 may have an acute angle with respect to one inclined surface 61b. Similarly, the surface B 107 may have an acute angle with respect to another inclined surface 61b.

In order to use the first blade 61a in the upper cutter 61 with the herein configuration, the surface A 105 may be set to face downward. In addition, in order to use the second blade 61c, the upper cutter 61 is separated from the ascending/descending rod 43 and then the upper cutter is flipped upside down and remounted on the ascending/descending rod 43.

In addition, a plurality of coupling holes 61e may be formed in the upper cutter 61. The coupling holes 61e may be fastening spaces coupling to coupling bolts (not shown) while the upper end portion of the ascending/descending rod 43 is inserted.

FIG. 17 is a side view illustrating a different type of the upper cutter 61 applicable to the electrode plate cutting unit according to embodiments of the present disclosure.

As shown in the drawing, the first blade 61a and the second blade 61c may be formed at a front end portion and a rear end portion of the surface A 105. The front end portion may be an end portion close to an imaginary plane including the blade of the lower cutter. The second blade 61c is formed at a side opposite to the first blade 61a and may be in contact with the upper surface of the electrode plate 17 at the same time together with the first blade. In order to use the second blade 61c after the first blade 61a is used, the upper cutter 61 is separated from the ascending/descending rod 43, rotated at an angle of 180 degrees while the surface A 105 faces the electrode plate, and then remounted on the ascending/descending rod.

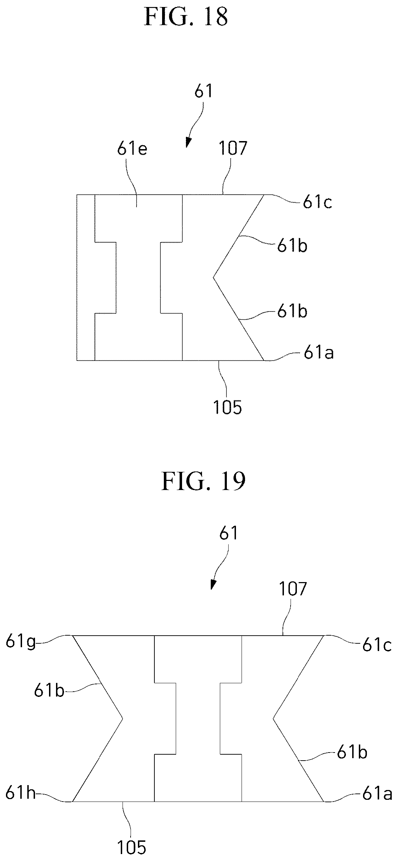

FIG. 18 is a side view illustrating another example of the upper cutter 61 applicable to the electrode plate cutting unit according to embodiments of the present disclosure.

As shown in FIG. 18, the first blade 61a may be formed on the surface A 105, and the second blade 61c may be formed on the surface B 107. The second blade 61c is spaced from the electrode plate while the first blade 61a is in contact with the electrode plate. In the case of the upper cutter 61 of FIG. 18, when the second blade 61c is used after the first blade 61a is used or, conversely, when the first blade 61a is used after the second blade 61c is used, the upper cutter 61 is separated from the ascending/descending rod 43, flipped upside down, and remounted.

FIG. 19 is a side view illustrating still another example of the lower cutter 51 applicable to the electrode plate cutting unit 40 according to embodiments of the present disclosure.

The upper cutter 61 shown in FIG. 19 has the first blade 61a and the fourth blade 61h at the front end portion and the rear end portion of the surface A 105, and the second blade 61c and the third blade 61g at a front end portion and a rear end portion of surface B 107. The four blades may be used selectively. In order to change the blade being used to another blade, the upper cutter 61 is separated from the ascending/descending rod 63, the mounting direction of the upper cutter is changed, and then the upper cutter is remounted. When one blade is in use, the remaining three blades remain in a standby state.

FIG. 20 is a diagram illustrating another example of the apparatus 20 for manufacturing a secondary battery according to embodiments of the present disclosure.

As shown in the drawing, each of the upper cutter 61 and the lower cutter 51, which are applied to the cutting unit 40, has a plurality of blades. In this way, when both the upper cutter 61 and the lower cutter 51 are applied in a switchable manner, the lifetime of the device 20 may be significantly extended.

According to an electrode plate cutting unit for manufacturing a secondary battery of the present disclosure, which is formed as described herein, two or more blades are formed on the upper cutter or a lower cutter so that the operating lifetime can be extended by a factor of two or more, process costs can be reduced, and productivity can be improved.

In addition, cutting performance can be continuously maintained, and it is very useful in a process requiring a high-quality cutting operation.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. An electrode plate cutting unit comprising:
an ascending/descending upper cutter which is installed above a transfer path of an electrode plate transferred along the transfer path to allow a mounting direction to be changed and on which is formed an upper cutter blade;
a stripper positioned below the transfer path of the electrode plate and configured to support the electrode plate when the electrode plate is cut;
a fixed body configured to elastically support the stripper; and
a lower cutter which is supported on a side portion of the fixed body below the transfer path and on which is formed a lower cutter blade,
wherein one of the upper cutter blade and the lower cutter blade includes two or more blades.

2. The electrode plate cutting unit as claimed in claim 1, wherein the lower cutter is mounted on the fixed body to allow a mounting direction to be changed in order to use one of a plurality of blades selectively.

3. The electrode plate cutting unit as claimed in claim 2, wherein the lower cutter blade comprises:
a first blade configured to cut the electrode plate through cross motion with the upper cutter; and
a second blade spaced apart from the first blade and configured to remain in a standby state when the first blade is in use.

4. The electrode plate cutting unit as claimed in claim 3, wherein:
the lower cutter has a plate shape; and
the first blade and the second blade are positioned parallel to one another on an upper end portion of the lower cutter while the lower cutter is mounted on the fixed body.

5. The electrode plate cutting unit as claimed in claim 3, wherein a third blade and a fourth blade, which are respectively parallel to the first blade and the second blade and maintain a standby state when the first blade is in use, are formed on the lower cutter.

6. The apparatus as claimed in claim 5, wherein the lower cutter has a plate shape, the first blade and the second blade are positioned at the upper end portion of the lower cutter, and the third blade and the fourth blade are positioned at a lower end portion of the lower cutter while the lower cutter is mounted on the fixed body.

7. The electrode plate cutting unit as claimed in any preceding claim, wherein the upper cutter blade includes:
a first blade configured to apply a shear force to the electrode plate through cross motion with the lower cutter while descending; and
a second blade parallel to the first blade and spaced apart therefrom and configured to remain in a standby state when the first blade is in use.

8. The electrode plate cutting unit as claimed in claim 6, wherein the first blade is formed at a front end portion in a transfer direction of the electrode plate; and
the second blade is formed at a side opposite to the first blade and is in contact with the electrode plate at the same time as the first blade.

9. The apparatus as claimed in claim 6 or 7, wherein the second blade is formed at a point spaced apart from the electrode plate while the first blade is in contact with the electrode plate.

10. The electrode plate cutting unit as claimed in claim 6 or 7, wherein a third blade and a fourth blade, which are respectively parallel to the first blade and the second blade and maintain a standby state when the first blade is in use, are further formed on the upper cutter.

11. An apparatus for manufacturing a secondary battery, comprising:
a transfer part configured to move an electrode plate, which will be cut, along a transfer path;
a winding part configured to wind the electrode plate transferred by the transfer part; and
the electrode plate cutting unit according to any preceding claim.
